# EUROPÄISCHE PATENTSCHRIFT

(11) **EP 2 459 618 B1**
(45) Veröffentlichungstag und Bekanntmachung des Hinweises auf die Patenterteilung: **23.04.2014**
(21) Anmeldenummer: 10736725.2
(22) Anmeldetag: 27.07.2010
(51) Int. Cl.: C08G 65/30

(54) **VERFAHREN ZUR HERSTELLUNG VON POLYETHEROLEN AUS ALKYLENOXIDEN**
METHOD FOR PRODUCING POLYETHEROLS FROM ALKYLENE OXIDES
PROCÉDÉ DE FABRICATION DE POLYÉTHEROLS À PARTIR D'OXYDES D'ALKYLÈNE

(30) Priorität: 29.07.2009 EP 09166741
(43) Veröffentlichungstag der Anmeldung: 06.06.2012
(73) Patentinhaber: BASF SE, 67056 Ludwigshafen (DE)
(72) Erfinder: SCHOPOHL, Matthias, 01127 Dresden (DE); OSTROWSKI, Thomas, 68199 Mannheim (DE); MECKELNBURG, Dirk, 67117 Limburgerhof (DE); JOVANOVIC, Renata, 67061 Ludwigshafen (DE); LÖFFLER, Achim, 67346 Speyer (DE); PALLASCH, Hans-Jürgen, 67169 Kallstadt (DE); FRIESE, Thorsten, 68199 Mannheim (DE); SCHAUß, Eckard, 67259 Heuchelheim (DE); SZESCHKUS, Susanne, 64319 Pfungstadt (DE); CHILEKAR, Vinit, 68161 Mannheim (DE); SCHWARZ, Hans Volkmar, 67071 Ludwigshafen (DE)
(86) Internationale Anmeldenummer: PCT/EP2010/060845
(87) Internationale Veröffentlichungsnummer: WO 2011/012599

(56) Entgegenhaltungen:
- EP-A1- 0 819 712
- EP-A2- 0 864 598
- WO-A1-99/47582
- WO-A1-2004/106408
- WO-A1-2005/121214
- DE-A1- 19 838 156

## Beschreibung

Polyetherole werden beispielsweise zur Herstellung von Polyurethankunststoffen, wie Polyurethanschaumstoffen, Polyurethangießhäuten und Elastomeren eingesetzt, die ihrerseits zur Herstellung von Formkörpern wie Matratzen, Kissen, Polstermöbeln und Bauteilen für die Automobilindustrie verwendet werden. Aus diesem Grund besteht ein Bedarf an Polyetherolen, die frei von toxischen Stoffen sind und keine störenden Gerüche aufweisen. Störende Gerüche und toxische Stoffe sind bei der Polyurethanherstellung unerwünscht.

Die störenden Gerüche werden durch niedermolekulare Verbindungen, wie nicht umgesetzte Alkylenoxide und monofunktionelle Nebenprodukte hervorgerufen.

Verfahren zur Herstellung von Polyetherolen sind bekannt und im Stand der Technik beschrieben. Polyetherole werden durch Polyaddition von Alkylenoxiden an polyfunktionelle Starterverbindungen hergestellt. Als Starterverbindungen werden beispielsweise Wasser, Alkohole, Säuren und Amine oder Gemische dieser Verbindungen eingesetzt. Als Katalysatoren für die Additionsreaktion werden Alkalihydroxid-Katalysatoren, Amin-Katalysatoren und Multimetallcyanid-Katalysatoren (DMC-Katalysatoren) eingesetzt. Bei der Verwendung von Alkalihydroxid-Katalysatoren ist der direkte Einsatz der erhaltenen Polyetherole zur Polyurethanherstellung nicht möglich, da die auf diesem Weg erhaltenen Rohpolyetherole eine zu hohe Reaktivität aufweisen. Aus diesem Grund muss bei der Herstellung von Polyetherolen mit Alkalihydroxidkatalysatoren zur Aufarbeitung eine Neutralisation der Rohpolyetherole mit verdünnter Säure zur Beseitigung des alkalischen Katalysators vorgenommen werden. Da bei der Neutralisation Salze entstehen, müssen diese in einem weiteren Aufarbeitungsschritt durch Filtration oder Extraktion von den Polyetherolen abgetrennt werden. Bei der vorstehend beschriebenen Synthese werden toxische und/oder geruchsintensive niedermolekulare Nebenprodukte oder Restmonomere durch die Neutralisation mit verdünnter Säure in geruchsarme und nicht toxische Stoffe überführt. Die Alkalihydroxidkatalysierte Herstellung von Polyetherolen ist aufgrund der Vielzahl der notwendigen Aufarbeitungsschritte wie Neutralisation und Entfernung der Salze technisch aufwendig.

Die im Stand der Technik beschriebenen Verfahren, bei denen Amin- oder DMC-Katalysatoren eingesetzt werden, bieten gegenüber den Alkalihydroxid-katalysierten Verfahren den Vorteil, dass bei ihnen der eingesetzte Katalysator im Produkt verbleiben kann und eine Neutralisation, verbunden mit einer anschließenden Entfernung der entstehenden Salze, nicht notwendig ist. Dieses Verfahren hat jedoch den Nachteil, dass das erhaltene Rohpolyetherol noch niedermolekulare Verbindungen, wie toxische Alkylenoxide und monofunktionelle Nebenprodukte enthält, die gesundheitsschädigend sind oder zu störenden Gerüchen führen. Die so erhaltenen Rohpolyetherole sind zur Herstellung von Polyurethanen vor allem aufgrund der toxischen Alkylenoxide ungeeignet.

Zur Aufarbeitung von Polyetherolen, die durch Amin- oder DMC-Katalyse hergestellt werden, sind im Stand der Technik Verfahren beschrieben, bei denen das Rohpolyetherol diskontinuierlich (batchweise) mit Wasserdampf oder Stickstoff behandelt wird.

EP 1 756 198 beschreibt ein Verfahren zur Herstellung von geruchsarmen Polyetherolen mit einem DMC-Katalysator, bei dem zur Entfernung niedermolekularer Nebenprodukte das Rohpolyetherol in einem diskontinuierlichen Prozess in einem gerührten Reaktor mit Stickstoff behandelt wird.

DE 103 24 998 beschreibt ebenfalls ein Verfahren zur Herstellung geruchsarmer Polyetherole mit einem DMC-Katalysator. Die Abtrennung der niedermolekularen Nebenprodukte erfolgt dabei in einem diskontinuierlichen Verfahren durch Behandlung des Rohpolyetherols mit Wasserdampf oder einer Mischung aus Wasserdampf und Stickstoff mit Hilfe einer reinen oder einer gerührten Blasensäule.

Die im Stand der Technik beschriebenen diskontinuierlichen Verfahren zur Herstellung von Polyetherolen umfassen zur Entfernung von niedermolekularen Nebenprodukten aus dem Rohpolyetherol Schritte, die apparativ aufwendige Trenneinheiten, wie Blasensäulen, gerührte Blasensäulen oder gerührte Reaktoren erfordern. Diese Trenneinheiten werden nur diskontinuierlich betrieben, da sie für einen kontinuierlichen Betrieb nur bedingt geeignet sind.

Die Aufgabe der vorliegenden Erfindung besteht darin, ein Verfahren zur Herstellung von Polyetherolen bereitzustellen, das eine wirtschaftliche und kostengünstige Entfernung von niedermolekularen Nebenprodukten aus Rohpolyetherolen ermöglicht. Eine weitere Aufgabe der vorliegenden Erfindung besteht in der Bereitstellung eines kontinuierlichen Verfahrens zur Herstellung von Polyetherolen, bei dem die Entfernung von niedermolekularen Nebenprodukten aus Rohpolyetherolen in kontinuierlicher Fahrweise betrieben werden kann.

Erfindungsgemäß wird diese Aufgabe gelöst durch ein Verfahren zur Herstellung von Polyetherolen, bei dem die Entfernung der niedermolekularen Nebenprodukte aus den Rohpolyetherolen in einer Kolonne mit Einbauten mit einem Strippgas erfolgt.

Gegenstand der vorliegenden Erfindung sind Verfahren gemäß den Ansprüchen 1-11.

Gegenstand der vorliegenden Erfindung ist somit ein Verfahren zur Herstellung von Polyetherolen, umfassend die folgenden Schritte:
a) Umsetzen mindestens einer Starterverbindung mit mindestens einem Alkylenoxid und einem Amin- oder DMC-Katalysator zu einem Rohpolyetherol und
b) Entfernung von niedermolekularen Nebenprodukten aus dem Rohpolyetherol aus Schritt a),
   dadurch gekennzeichnet, dass das Rohpolyetherol im Schritt b) in einer Kolonne mit Einbauten mit einem Strippgas behandelt wird, wobei das Verfahren kontinuierlich ausgeführt wird.

Ebenfalls beschrieben sind Polyetherole, erhältlich nach dem erfindungsgemäßen Verfahren, sowie die Verwendung der Polyetherole zur Synthese von Polyurethanen.

Das erfindungsgemäße Verfahren weist gegenüber den im Stand der Technik beschriebenen Verfahren eine erhöhte Effizienz auf und kann zudem in kontinuierlicher Fahrweise betrieben werden. Das erfindungsgemäße Verfahren kann zudem bei gegenüber dem im Stand der Technik beschriebenen Verfahren bei niedrigeren Drücken betrieben werden, wodurch die Abtrennung flüchtiger Bestandteile verbessert wird. Darüber hinaus kann in einigen Fällen die Abtrennung nach dem erfindungsgemäßen Verfahren verglichen mit dem Stand der Technik in deutlich kleineren Reaktorvolumina erfolgen.

Unter Rohpolyetherolen im Rahmen der vorliegenden Erfindung werden Polyetherole verstanden, die nach einem der vorstehend beschriebenen Verfahren in Schritt a) hergestellt werden und Verunreinigungen wie niedermolekulare Nebenprodukte enthalten. Unter niedermolekularen Nebenprodukten werden Alkylenoxide, wie Ethylenoxid und Propylenoxid, sowie andere niederfunktionelle Nebenprodukte, wie z.B. Aldehyde und Ketone verstanden, die entweder bei der Alkoxilierung als Nebenprodukte entstehen oder bereits als Verunreinigungen über die Alkylenoxide oder Starterverbindungen in das Polyol gelangen und die störende Gerüche aufweisen.

Die Herstellung des Rohpolyetherols in Schritt a) ist an sich bekannt und im Stand der Technik beschrieben. Die Herstellung des Rohpolyetherols erfolgt mittels Amin- oder DMC-Katalyse.

Die chemischen und physikalischen Eigenschaften der hergestellten Rohpolyetherole können in weiten Bereichen variieren. Bevorzugt werden in Schritt a) Rohpolyetherole zur Herstellung von Hartschaumpolyetherole mit einem mittleren Molekulargewicht von ≤ 1500 g/mol oder zur Herstellung von Weichschaumpolyetherolen oder CASE-Polyetherolen (coatings, adhesives, sealants, elastomers) mit einem mittleren Molekulargewicht von ≤ 20.000 g/mol hergestellt, die Ethylenoxid und/oder Propylenoxideinheiten enthalten.

Bevorzugt werden die in Schritt a) hergestellten Rohpolyetherole frisch in Schritt b) eingesetzt. Unter frisch hergestellten Rohpolyetherolen werden im Rahmen der vorliegenden Erfindung Polyetherole verstanden, deren Produktion nicht länger als 12 Stunden, bevorzugt nicht länger als 6 Stunden, mehr bevorzugt nicht länger als 3 Stunden und insbesondere bevorzugt nicht länger als 30 Minuten zurückliegt. In einer weiteren insbesondere bevorzugten Ausführungsform wird das in Schritt a) hergestellte Rohpolyetherol direkt in den Reinigungsschritt (Schritt b)) eingesetzt.

Zur Herstellung von Weichschaumpolyetherolen sind DMC-katalysierte kontinuierliche Verfahren besonders bevorzugt. Zur Herstellung von Hartschaumpolyetherolen sind Amin-katalysierte Verfahren besonders bevorzugt.

Zur Herstellung von Weichschaumpolyetherolen kann Schritt a) beispielsweise gemäß EP 1 763 550 durchgeführt werden. Die kontinuierliche Herstellung des Rohpolyetherols in Schritt a) erfolgt dabei durch Anlagerung von Alkylenoxiden an H-funktionelle Startsubstanzen unter Verwendung eines DMC-Katalysators, umfassend die Schritte:
i) Herstellung eines Rohpolyetherols durch kontinuierliche Dosierung mindestens einer Starterverbindung, eines Alkylenoxids oder einer Mischung aus mindestens zwei Alkylenoxiden und der erforderlichen Menge an DMC-Katalysator in einem kontinuierlichen Reaktor,
ii) kontinuierliche Entnahme des Produkts aus Schritt i) aus dem Reaktor.

In einer weiteren Ausführungsform können in Schritt a) auch Rohpolyetherole hergestellt werden, die mindestens zwei unterschiedlich aufgebaute Segmente in der Polyetherkette enthalten. Diese sind beispielsweise in Schritt a) durch die kontinuierliche Herstellung von Polyetherolen durch Anlagerung von Alkylenoxiden an Starterverbindungen unter Verwendung eines DMC-Katalysators umfassend die Schritte:
i) Herstellung eines Rohpolyetherols durch kontinuierliche Dosierung mindestens einer Starterverbindung, eines Alkylenoxids oder einer Mischung aus mindestens zwei Alkylenoxiden und der erforderlichen Menge an DMC-Katalysator in einem kontinuierlichen Reaktor und
ii) kontinuierliche Entnahme des Rohpolyetherols aus Schritt i) aus dem Reaktor
   und optional
iii) kontinuierliche Dosierung des Rohpolyetherols aus Schritt i), eines von dem in Schritt i) verschiedenen Alkylenoxids oder einer von der Mischung in Schritt i) verschiedenen Mischung aus mindestens zwei Alkylenoxiden und gegebenenfalls der erforderlichen Menge an DMC-Katalysator in einen weiteren kontinuierlichen Reaktor,
iv) kontinuierliche Entnahme des Blockpolyetherols aus Schritt iii) aus dem Reaktor,
erhältlich.

Die kontinuierliche Herstellung von Hartschaumpolyetherolen kann beispielsweise analog zu dem kontinuierlichen Verfahren zur Herstellung von Weichschaumpolyetherolen erfolgen, wobei anstelle des DMC-Katalysators ein Amin-Katalysator eingesetzt wird. Die Herstellung von Hartschaumpolyetherolen wird auch in WO 2007/147780 beschrieben.

Als Starterverbindung eignen sich alle Verbindungen, die einen aktiven Wasserstoff aufweisen. Erfindungsgemäß bevorzugt sind als Starterverbindungen OH-funktionelle Verbindungen.

Als Starterverbindung zur Herstellung von Weichschaumpolyetherolen geeignet sind erfindungsgemäß Verbindungen mit 2-8 funktionellen Gruppen mit aciden Wasserstoffatomen wie Polyalkohole oder Polyamine. Geeignet sind beispielsweise die folgenden Verbindungen: Wasser, organische Dicarbonsäuren, wie Bernsteinsäure, Adipinsäure, Phthalsäure und Terephthalsäure, sowie ein- oder mehrwertige Alkohole, wie Monoethylenglykol, Propandiol-1,2 und-1,3, Diethylenglykol, Dipropylenglykol, Butandiol-1,4, Hexandiol-1,6, Glycerin, Trimethylolpropan, Pentaerythrit, Sorbit und Saccharose. Bevorzugt werden als Polyetherpolyalkohole Anlagerungsprodukte von Ethylenoxid und/oder Propylenoxid an Wasser, Monoethylenglykol, Diethylenglykol, Propandiol-1,2, Diproplyenglykol, Glycerin, Trimethylolpropan, Amine wie Triethanolamin, Tri-(2-propanolamin), Tri-(3-propanol-amin), Ethylendiamin, Propylenediamin, vicinales Toluylendiamin, 2,6- oder 2,4-substituiertes Toluylendiamin, Diphenylmethandiamin, Pentaerythrit, Sorbit und/oder Saccharose einzeln oder in Mischungen eingesetzt. Zur Herstellung von Weichschaumpolyetherolen sind Verbindungen bevorzugt, die 2 bis 4 reaktionsfähige (acide) Wasserstoffatome aufweisen.

Die Starterverbindungen können erfindungsgemäß auch in Form von Alkoxylaten zum Einsatz kommen. Bevorzugt sind insbesondere Alkoxylate mit einem Molekulargewicht M_{w} in Bereich von 62 bis 15000 g /Mol

Ebenso geeignet als Starterverbindungen für Weichschäume sind Makromoleküle mit funktionellen Gruppen, die aktive Wasserstoff-Atome aufweisen, beispielsweise Hydroxylgruppen, insbesondere solche, die in der WO 01/16209 genannt sind.

Als Starterverbindung zur Herstellung von Hartschaumpolyetherolen können neben den vorstehend unter den Weichschaumpolyetherolen genannten Verbindungen auch Starterverbindungen mit Aminogruppen eingesetzt werden. Zur Herstellung von Hartschaumpolyetherolen werden bevorzugt Startersubstanzen mit mindestens 3 reaktionsfähigen Wasserstoffatomen eingesetzt. Vorzugsweise handelt es sich dabei um aliphatische Amine, insbesondere Ethylendiamin, und aromatische Amine, insbesondere Toluylendiamin (TDA) und Mischungen aus Isomeren des Diphenylmethandiisocyanats und seinen höheren Homologen (MDA), um Mischungen von aromatischen und aliphatischen Aminen oder um feste OH-funktionelle Verbindungen, wie Pentaerythrit, Kohlenhydrate, bevorzugt Stärke, Cellulose und besonders bevorzugt Zucker, insbesondere Sorbit, Mannit, Glucose, Fructose und Saccharose. Auch die Verwendung von Melamin und dessen H-funktionellen Derivaten ist möglich.

Für das erfindungsgemäße Verfahren können prinzipiell alle geeigneten Alkylenoxide eingesetzt werden. Geeignet sind beispielsweise C₂-C₂₀-Alkylenoxide, wie beispielsweise Ethylenoxid, Propylenoxid, 1,2-Butylenoxid, 2,3-Butylenoxid, Isobutylenoxid, Pentenoxid, Hexenoxid, Cyclohexenoxid, Styroloxid, Dodecenepoxid, Ocatdecenepoxid, und Mischungen dieser Epoxide. Insbesondere geeignet sind Ethylenoxid, Propylenoxid, 1,2-Butylenoxid, 2,3-Butylenoxid, Isobutylenoxid und Pentenoxid, wobei Propylenoxid und Ethylenoxid besonders bevorzugt sind.

Nachfolgend wird das DMC-katalysierte Verfahren näher beschrieben. Als DMC-Katalysator können prinzipiell alle dem Fachmann bekannten geeigneten Verbindungen verwendet werden.

Als Katalysator geeignete DMC-Verbindungen sind beispielsweise in der WO 99/16775 und der DE 10117273.7 beschrieben. Insbesondere sind für die Alkoxylierung Doppelmetallcyanid-Verbindungen der allgemeinen Formel I als Katalysator geeignet:

M¹ₐ[M²(CN)_{b}(A)_{c}]_{d}·fM¹_{g}Xₙ·h(H₂O)·eL·kP (I),

in der
- M¹ mindestens ein Metallion, ausgewählt aus der Gruppe bestehend aus Zn²⁺, Fe²⁺, Fe³⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr²⁺, Cr³⁺, Cd²⁺, Hg²⁺, Pd²⁺, Pt²⁺, V²⁺, Mg²⁺, Ca²⁺, Ba²⁺, Cu²⁺, La³⁺, Ce³⁺, Ce⁴⁺, Eu³⁺, Ti³⁺, Ti⁴⁺, Ag⁺, Rh²⁺, Rh³⁺, Ru²⁺, Ru³⁺ ist,
- M² mindestens ein Metallion, ausgewählt aus der Gruppe bestehend aus Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺ ist,
- A und X unabhängig voneinander ein Anion, ausgewählt aus der Gruppe, bestehend aus Halogenid, Hydroxid, Sulfat, Carbonat, Cyanid, Thiocyanat, Isocyanat, Cyanat, Carboxylat, Oxalat, Nitrat, Nitrosyl, Hydrogensulfat, Phosphat, Dihydrogenphosphat, Hydrogenphosphat oder Hydrogencarbonat sind,
- L ein mit Wasser mischbarer Ligand ist, ausgewählt aus der Gruppe, bestehend aus Alkoholen, Aldehyden, Ketonen, Ethern, Polyethern, Estern, Polyestern, Polycarbonat, Harnstoffen, Amiden, primären, sekundären und tertiären Aminen, Liganden mit Pyridin-Stickstoff, Nitrilen, Sulfiden, Phosphiden, Phosphiten, Phosphanen, Phosphonaten und Phosphaten,
- k eine gebrochene oder ganze Zahl größer oder gleich Null ist, und
- P ein organischer Zusatzstoff ist,
- a, b, c, d, g und n so ausgewählt sind, dass die Elektroneutralität der Verbindung (I) gewährleistet ist, wobei c = 0 sein kann,
- e die Anzahl der Ligandenmoleküle und eine gebrochene oder ganze Zahl größer 0 oder 0 ist,
- f, h und m unabhängig voneinander eine gebrochene oder ganze Zahl größer 0 oder 0 sind.

Als organische Zusatzstoffe P sind zu nennen: Polyether, Polyester, Polycarbonate, Polyalkylenglykolsorbitanester, Polyakylenglykolglycidylether, Polyacrylamid, Poly(acrylamid-co-acrylsäure), Polyacrylsäure, Poly(acrylamid-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose, Polyacetate, ionische oberflächen- und grenzflächenaktive Verbindungen, Gallensäure oder deren Salze, Ester oder Amide, Carbonsäureester mehrwertiger Alkohole und Glycoside.

Diese Katalysatoren können kristallin oder amorph sein. Für den Fall, dass k gleich null ist, sind kristalline Doppelmetallcyanid-Verbindungen bevorzugt. Im Fall, dass k größer null ist, sind sowohl kristalline, teilkristalline, als auch substantiell amorphe Katalysatoren bevorzugt.

Von den modifizierten Katalysatoren gibt es verschiedene bevorzugte Ausführungsformen. Eine bevorzugte Ausführungsform sind Katalysatoren der Formel (I), bei denen k größer null ist. Der bevorzugte Katalysator enthält dann mindestens eine Doppelmetallcyanid-Verbindung, mindestens einen organischen Liganden und mindestens einen organischen Zusatzstoff P.

Bei einer anderen bevorzugten Ausführungsform ist k gleich null, optional ist e auch gleich null und X ist ausschließlich ein Carboxylat, bevorzugt Formiat, Acetat und Propionat. Derartige Katalysatoren sind in der WO 99/16775 beschrieben. Bei dieser Ausführungsform sind kristalline Doppelmetallcyanid-Katalysatoren bevorzugt. Ferner bevorzugt sind Doppelmetallcyanid-Katalysatoren, wie in der WO 00/74845 beschrieben, die kristallin und plättchenförmig sind.

Die Herstellung der modifizierten Katalysatoren erfolgt durch Vereinigung einer MetallsalzLösung mit einer Cyanometallat-Lösung, die optional sowohl einen organischen Liganden L als auch einen organischen Zusatzstoff P enthalten können. Anschließend werden der organische Ligand und optional der organische Zusatzstoff zugegeben. Bei einer bevorzugten Ausführungsform der Katalysatorherstellung wird zunächst eine inaktive Doppelmetallcyanid-Phase hergestellt und diese anschließend durch Umkristallisation in eine aktive Doppelmetallcyanidphase überführt, wie in der PCT/EP01/01893 beschrieben.

Bei einer anderen bevorzugten Ausführungsform der Katalysatoren sind f, e und k ungleich Null. Dabei handelt es sich um Doppelmetallcyanid-Katalysatoren, die einen mit Wasser mischbaren organischen Liganden (im Allgemeinen in Mengen von 0,5 bis 30 Gew.%) und einen organischen Zusatzstoff (im Allgemeinen in Mengen von 5 bis 80 Gew.%) enthalten wie in der WO 98/06312 beschrieben. Die Katalysatoren können entweder unter starkem Rühren (24000U/Min mit Turrax) oder unter Rühren hergestellt werden, wie in der US 5,158,922 beschrieben.

Insbesondere als Katalysator geeignet sind für die Alkoxylierung Doppelmetallcyanid-Verbindungen, die Zink und Kobalt oder Eisen und Kobalt enthalten. Besonders geeignet sind Zink-Kobalt-Katalysatoren.

Bevorzugt werden kristalline DMC-Verbindungen eingesetzt. In einer bevorzugten Ausführungsform wird eine kristalline DMC-Verbindung vom Zn-Co-Typ als Katalysator verwendet, der als weitere Metallsalzkomponente Zinkacetat enthält. Derartige Verbindungen kristallisieren in monokliner Struktur und weisen einen plättchenförmigen Habitus auf. Derartige Verbindungen werden beispielsweise in der WO 00/74845 oder der PCT/EP01/01893 beschrieben.

Als Katalysator geeignete DMC-Verbindungen können prinzipiell auf alle dem Fachmann bekannten Arten hergestellt werden. Beispielsweise können die DMC-Verbindungen durch direkte Fällung, "incipient wetness"-Methode, durch Herstellung einer Precursor-Phase und anschließende Umkristallisation hergestellt werden.

Die DMC-Verbindungen können als Pulver, Paste oder Suspension eingesetzt werden oder zu einem Formkörper verformt werden, in Formkörper, Schäume oder ähnliches eingebracht werden oder auf Formkörper, Schäume oder ähnliches aufgebracht werden.

Die zur Alkoxylierung in Schritt a) eingesetzte DMC-Katalysator-Konzentration bezogen auf das Rohpolyetherol ist typischerweise kleiner als 2000 ppm, bevorzugt kleiner als 1000 ppm, insbesondere kleiner als 500 ppm, besonders bevorzugt kleiner als 100 ppm, beispielsweise kleiner als 50 ppm.

Die Additionsreaktion in Schritt a) unter DMC-Katalyse wird bei Temperaturen von etwa 90 bis 240°C, vorzugsweise von 100 bis 160°C, im geschlossenen Gefäß ausgeführt. Das Alkylenoxid wird dem Reaktionsgemisch unter dem bei der gewählten Reaktionstemperatur herrschenden Dampfdruck des Alkylenoxidgemisches und dem Dampfdruck des gegebenenfalls vorhandenen Inertgases (vorzugsweise Stickstoff) zugeführt.

Wird in Schritt a) ein Alkylenoxidgemisch eingesetzt, so werden Rohpolyetherole gebildet, in denen die verschiedenen Alkylenoxidbausteine praktisch statistisch verteilt sind. Variationen in der Verteilung der Bausteine längs der Polyetherkette ergeben sich aufgrund unterschiedlicher Reaktionsgeschwindigkeiten der Komponenten und können auch willkürlich durch kontinuierliche Zufuhr einer Alkylenoxidmischung programmgesteuerter Zusammensetzung erreicht werden. Werden die verschiedenen Alkylenoxide nacheinander zur Reaktion gebracht, so erhält man Polyetherketten mit blockartiger Verteilung der Alkylenoxidbausteine.

Die Länge der Polyetherketten schwankt innerhalb des Reaktionsprodukts statistisch um einen Mittelwert der sich im Wesentlichen aus der Zusatzmenge ergebenden stöchiometrischen Werte.

Das Amin-katalysierte Verfahren kann analog zum DMC-katalysierten Verfahren durchgeführt werden, wobei anstelle eines DMC-Katalysators ein Amin-Katalysator eingesetzt wird.

Als Katalysatoren werden basische Verbindungen wie tertiäre Amine eingesetzt. Beispiele für aminische Katalysatoren sind Piperazin, Derivate wie 1,4-Dimethylpiperazin, N-Hydroxyethylpiperazin, 1,3,5-Tris(dimethylaminopropyl)hexahydrotriazin, N,N-Dimethylcyclohexylamin, Dimethylbenzylamin, 2,2'-Bis(2-ethyl-2-azobicycloether), 1,8-Diazabicyclo-(5,4,0)-undecen-7, Morpholin-Derivate wie 4-Methyl- und 4-Ethyl-Morpholin, 2,2-Dimorpholinoethylether, Imidazol-Derivate wie 1-Methyl- und 1,2-Dimethyl-imidazole, N-(3-aminopropyl)imidazol, Diazobicyclooctan, Triethylamin, Dimethylaminopropylamin, Diethylaminoethylamin, Trimethylamin (TMA), Tributylamin, Triethylamin (TEA), Dimethylethanolamin (DMEOA), Dimethylcyclohexylamin (DMCHA), Imidazol und substituierte Imidazolderivate, vorzugsweise Dimethylethanolamin. Die genannten Katalysatoren können einzeln oder im Gemisch miteinander eingesetzt werden. Die Katalysatorkonzentration kann, bezogen auf die Gesamtmasse des Polyols, zwischen 0,01 und 10 Gew.-% liegen. Bevorzugt sind Katalysatorkonzentrationen von 0,05 - 5 Gew.-%, insbesondere bevorzugt von 0,1 - 2 Gew.-%, jeweils bezogen auf die Gesamtmenge des Polyols.

Das Amin-katalysierte Verfahren wird bei Temperaturen zwischen 50 und 180°C durchgeführt. Der Druck im Reaktor ist so zu wählen, dass die Alkylenoxide größtenteils flüssig bleiben.

Erfindungsgemäß ist es möglich, dass dem Reaktionsgemisch oder einer der Komponenten vor oder nach der Umsetzung gemäß Schritt a) ein Stabilisator zugesetzt wird. Dies kann die Bildung von unerwünschten Nebenprodukten aufgrund von Oxidationsprozessen verhindern.

Im Rahmen der vorliegenden Erfindung können prinzipiell alle dem Fachmann bekannten Stabilisatoren eingesetzt werden.

Diese Stoffkomponenten umfassen Antioxidantien, Radikalfänger, Peroxidzersetzer, Synergisten und Metalldesaktivatoren.

Als Antioxidantien werden beispielsweise sterisch gehinderte Phenole und aromatische Amine eingesetzt.

Zur Entfernung von niedermolekularen Nebenprodukten aus dem in Schritt a) hergestellten Rohpolyetherol wird dieses in Schritt b) nach dem erfindungsgemäßen Verfahren in einer Kolonne mit Einbauten mit einem Strippgas behandelt. Sowohl (Schritt a) als auch Schritt b) erfolgen in der Weise, dass sich ein kontinuierlicher Gesamtprozess zur Herstellung von Polyetherolen ergibt.

Die Rohpolyetherole werden dazu über eine Kolonne mit Einbauten unter vermindertem Druck bei erhöhten Temperaturen gestrippt. Unter Rohpolyetherol im Rahmen der vorliegenden Erfindung werden Polyetherole verstanden, die nach einem der vorstehend beschriebenen Verfahren in Schritt a) hergestellt werden und Verunreinigungen wie niedermolekulare Nebenprodukte enthalten.

Unter Strippen wird im Rahmen der vorliegenden Erfindung ein Verfahren verstanden, bei dem die niedermolekularen Nebenprodukte durch Durchleiten eines Strippgases aus dem Rohpolyetherol entfernt und in das Strippgas überführt werden. Als Strippgas werden Wasserdampf und/oder Inertgas eingesetzt. Als Inertgas sind stickstoffhaltige Gasgemische, insbesondere Stickstoff bevorzugt. In einer bevorzugten Ausführungsform wird ein Wasserdampf-haltiges Strippgas, wie Wasserdampf oder eine Mischung aus Wasserdampf und Stickstoff eingesetzt. In einer besonders bevorzugten Ausführungsform wird als Strippgas Wasserdampf verwendet.

Unter der Desorption - auch Strippung genannt - versteht man den selektiven Übergang von gelösten flüssigen Komponenten in die "inerte" Gasphase aufgrund von Verteilungsgleichgewichten zwischen Gas- und Flüssigphase. Die Strippung ist eine Sonderform der Destillation. Sie unterscheidet sich von dieser dadurch, dass die zur Stofftrennung aufgrund von Verteilungsgleichgewichten benötigte zweite Phase nicht durch Verdampfen erzeugt wird, sondern als Hilfstoff (Strippgas) zugegeben wird. Eine Möglichkeit eine Desorption durchzuführen, ist das Austreiben der abzutrennenden Komponente im inerten Gasstrom bzw. Dampfstrom. Das Trägergas wird dabei im Gegenstrom zum beladenen Lösungsmittel geführt. Die abzutrennende Komponente wandert aus der Flüssigphase in die Gasphase. Bei Inertgas als Trägergas wird der Partialdruck der abzutrennenden Komponente in der Gasphase durch ständig zugeführtes Inertgas niedrig gehalten.

Das Rohpolyetherol wird dazu im Gegenstrom, d.h. gegen die Fließrichtung des Strippgases, durch eine Kolonne mit Einbauten geleitet. Die Kolonne wird mit einer Berieselungsdichte von 0,5 bis 20 m³/m²*h, bevorzugt mit 2 bis 15 m³/m²*h, betrieben. Die Berieselungsdichte gibt damit das Volumen des eingesetzten Rohpolyols pro Stunde und Querschnitt der Kolonne an. Bei der Strippung von Hartschaumpolyetherolen ist eine Berieselungsdichte von 10 bis 15 m³/m²*h besonders bevorzugt. Bei der Strippung von Weichschaumpolyetherolen ist eine Berieselungsdichte von 5 bis 10 m³/m²*h besonders bevorzugt.

Das Strippen wird bei Temperaturen im Bereich von 20 bis 300°C, bevorzugt bei 80 bis 200°C und besonders bevorzugt bei 100 bis 160°C durchgeführt. Die Kolonne wird dabei bei einem Druck von 2 bis 300 mbar (absolut), bevorzugt bei einem Druck von 5 bis 80 mbar (absolut) und besonders bevorzugt bei einem Druck von 8 bis 60 mbar (absolut) betrieben. Bevorzugt wird beim Strippen mit H₂O die Dampfdruckstufe (p) so gewählt, dass der Wassergehalt im Endprodukt zwischen 0,01 und 0,2 %, bevorzugt zwischen 0,05 und 0,15% beträgt.

Bei höheren Wassergehalten kann ein separater Trocknungsschritt nachgeschaltet werden, bei dem das Polyol bei Temperaturen bevorzugt zwischen 100 und 160°C unter einem Vakuum von 2-300 mbar in einem Zeitraum von 5 Minuten bis 2 Stunden weiter getrocknet wird.

Das Strippgas wird dabei in Mengen von 1 bis 30 Nm³ (Normkubikmeter) pro Tonne Polyetherol, bevorzugt 2 bis 20 Nm³ pro Tonne Polyetherol, insbesondere bevorzugt 3 bis 10 Nm³ pro Tonne Polyetherol und am meisten bevorzugt 4-6 Nm³ pro Tonne Polyetherol zugefahren.

Für Polyole mit Viskositäten von < 5000 mPas (25°C) beträgt das Verhältnis von Polyol zu Strippgas im Allgemeinen 0,1 - 10 Mol Polyol/Mol Strippgas, bevorzugt 0,2 bis 5 Mol Polyol/Mol Strippgas, insbesondere bevorzugt 0,3 bis 3 Mol Polyol/Mol Strippgas und am meisten bevorzugt 0,4-2 Mol Polyol/Mol Strippgas.

Für Polyole mit Viskositäten von > 5000 mPas beträgt das Verhältnis von Polyol zu Strippgas 0,4 - 30 Mol Polyol/Mol Strippgas, bevorzugt 0,7 bis 25 Mol Polyol/Mol Strippgas, insbesondere bevorzugt 1 bis 20 Mol Polyol/Mol Strippgas und am meisten bevorzugt 1,3-15 Mol Polyol/Mol Strippgas.

Geeignete Verweilzeiten des Rohpolyetherols in der Kolonne liegen im Bereich von 1 bis 100 Minuten, bevorzugt im Bereich von 5 bis 40 Minuten.

Unter einer Kolonne mit Einbauten im Rahmen der vorliegenden Erfindung wird eine Kolonne verstanden, die trennwirksame Einbauten aufweist. Dazu können grundsätzlich alle bekannten Einbauten, insbesondere Böden, Füllkörper oder Packungen eingesetzt werden.

Als Einbauten eignen sich übliche Einbauten wie handelsübliche Böden, Füllkörper oder Packungen, beispielsweise Glockenböden, Tunnelböden, Ventilböden, Siebböden, Dualflow-Böden und Gitterböden, Pall-Ringe^{®}, Berl^{®}-Sattelkörper, Netzdrahtringe, Raschig-Ringe^{®}, Interlocks^{®}-Sättel, Interpack^{®}-Füllkörper und Intos^{®}-, aber auch gerordnete Packungen wie Sulzer Mellapak und Mellapakplus, Sulzer-Optiflow^{®}, Kühni-Romopak^{®}, MontzA3-500^{®}-Gewebepackungen, SulzerBX^{®}-Gewebepackungen, Sulzer Mellacarbon, Sulzer Mellagrid, Nuttergrid, Gauze packing Type BX, Gauze packing BXPlus, Gauze packing Type CY, Gauze packing Type DX, Gauze packing Type EX, Montz-Pak Type B1, Montz-Pak Type BSH, Montz-Pak Type A3, Montz-Pak Type M, Montz-Pak Type MN, MontzPak Typ C1, Koch-Glitsch Flexipac und Flexipac HC, Koch-Glitsch Gempak, Knitted Wire packing ACS and ACSX, Raschig-PAK und Raschig Super-PAK, Kühni Rombopak and Rombopak S.

Bevorzugt sind gepackte Kolonnen. Darunter werden Packungskolonnen verstanden, die regellos geschüttete Füllkörper oder geordnete Packungselemente enthalten. Als regellos geschüttete Füllkörper können Packungselemente aus Werkstoffen wie Stahl, Edelstahl, Kupfer, Kohlenstoff, Steingut, Porzellan, Glas und Kunststoff verwendet werden. Geeignete Packungselemente für Kolonnen, die regellos geschüttete Füllkörper enthalten, sind beispielsweise in Klaus Sattler: Thermische Trennverfahren, VCH-Verlag, 1995, beschrieben. In einer besonders bevorzugten Ausführungsform werden gepackte Kolonnen mit geordneten Packungselementen eingesetzt. Geordnete Packungselemente sind beispielsweise Draht-Strick-Blech- oder Gewebepackungen.

Besonders bevorzugt sind Gewebepackungen, insbesondere bevorzugt sind MontzA3-500^{®} und SulzerBX^{®}-Gewebepackungen.

In einer weiteren Ausführungsform wird als Strippgas ein Wasserdampf-haltiges Strippgas verwendet, wobei Wasserdampf besonders bevorzugt ist. Überraschenderweise wurde gefunden, dass trotz der Verwendung von Wasserdampf-haltigen Gasgemischen als Strippgas bei dem erfindungsgemäßen Verfahren ein Trocknungsschritt der erhaltenen Polyetherole nicht notwendig ist.

Gegenstand der vorliegenden Erfindung ist somit auch ein Verfahren zur Entfernung niedermolekularer Nebenprodukte aus Rohpolyetherolen mit einem Wasserdampf-haltigen Strippgas, bei dem nach der Strippung kein Trocknungsschritt des gereinigten Polyetherols durchgeführt wird.

Darüber hinaus werden auch die Polyetherole beschrieben, die nach dem erfindungsgemäßen Verfahren erhältlich sind. Beschrieben wird somit auch ein Polyetherol, erhältlich nach einem Verfahren mindestens umfassend die folgenden Schritte
a) Umsetzen mindestens einer Startverbindung mit mindestens einem Alkylenoxid und einem Katalysator zu einem Rohpolyetherol und
b) Entfernung von niedermolekularen Nebenprodukten aus dem Rohpolyetherol aus Schritt a), dadurch gekennzeichnet, dass das Rohpolyetherol in einer Kolonne mit Einbauten mit einem Strippgas behandelt wird.

Die Polyetherole, die nach dem erfindungsgemäßen Verfahren erhältlich sind, zeichnen sich insbesondere durch einen geringen Anteil an Verunreinigungen aus. Sie weisen geringen Geruch und niedrige FOG(Fogging)- und VOC(Volatile organic compounds)-Werte auf. Insbesondere weisen die erfindungsgemäßen Polyetherole niedrige Restalkylenoxidwerte auf, bevorzugt kleiner/gleich 100 ppm, mehr bevorzugt kleiner/gleich 50 ppm und insbesondere bevorzugt kleiner/gleich 20 ppm, jeweils bezogen auf das Polyetherol.

Die hergestellten Weichschaum-Polyetherole eignen sich aufgrund der geringen Anteile an Verunreinigungen insbesondere zur Herstellung von Polyurethanen für die Automobil- und Möbelindustrie.

Die Hartschaumpolyetherole finden vorwiegen Anwendung in der Isoliertechnik, bei Haushaltsgeräten und in der Bauindustrie. Beschrieben wird auch die Verwendung eines Polyetherols, erhältlich nach dem erfindungsgemäßen Verfahren, zur Synthese von Polyurethanen.

Die erfindungsgemäß hergestellten Polyetherole eignen sich insbesondere zur Herstellung von Polyurethan-Schaumstoffen, Polyurethan-Gieshäuten und Elastomeren. Vorzugsweise werden die erfindungsgemäß hergestellten Polyetherole zur Synthese von PolyurethanWeichschaum eingesetzt. Dabei kann es sich beispielsweise um Blockweichschäume oder Formweichschäume handeln. Beschrieben wird auch in einer weiteren Ausführungsform die Verwendung eines Polyetherols erhältlich nach einem erfindungsgemäßen Verfahren zur Synthese von Polyurethanen, wobei das Polyurethan ein Polyurethanweichschaum ist.

Unter Polyurethan-Schaumstoffen werden insbesondere Schaumstoffe bevorzugt, die in der Automobil- und Möbelindustrie verwendet werden. Derartige Polyurethane sind beispielsweise geeignet zur Herstellung von Formkörpern, insbesondere Formkörper aus Polyurethan-Blockweichschaum. Vorteilhaft ist hier der geringe Gehalt an Verunreinigungen, da so keine störenden Gerüche auftreten, die aus dem Weichschaumformteil austreten können. Darüber hinaus sind die VOC- und FOG-Werte niedrig.

Erfindungsgemäße Formkörper sind beispielsweise Matratzen, Kissen, Formteile für die Automobilindustrie und Polstermöbel.

Die Erfindung wird durch die Beispiele näher erläutert, ohne sie darauf zu beschränken.

### Beispiel 1

### Herstellung eines DMC-katalysierten Weichschaumpolyetherols (Polyol I)

3200 g eines glyceringestarteten und mit Phosphorsäure aufgearbeiteten Propoxylats mit einer OH-Zahl von 298 mg KOH/g wurden im 20l-Rührkesselreaktor mit 44g einer 4,53%igen DMC-Katalysatorsuspension (entspr. 100 ppm DMC-Katalysator bezogen auf das herzustellende Produkt) versetzt und bei 120 °C und bei einem Vakuum von 40 mbar entwässert, bis der Wassergehalt unter 200 ppm lag. Anschließend wurden etwa 400 g 1,2-Propylenoxid (PO) zudosiert und das Anspringen der Reaktion abgewartet, was an einer kurzzeitigen Temperaturerhöhung und einem schnellen Abfall des Reaktordruckes erkennbar war. Nachfolgend wurde bei gleicher Temperatur 16450 g eines Gemischs aus 14910 g PO und 1940 g Ethylenoxid (EO) über einen Zeitraum von 2.5h zugefahren. Nach Erreichen eines konstanten Reaktordruckes wurde nicht umgesetztes Monomer und andere flüchtige Bestandteile im Vakuum abdestilliert und das Polyetherol abgelassen.

Das erhaltene Polyetherol (Polyol I) besitzt folgende Kennzahlen:
OH-Zahl (OHZ): 48,8 mg KOH/g
Mittleres Molekulargewicht: 3420 g/mol
Säurezahl: 0,013 mg KOH/g
Wassergehalt: 0,011 %
Viskosität: (25°C) 566 mPas

### Beispiel 2

### Herstellung eines Amin-katalysierten Hartschaumpolyetherols (Polyol II)

In einem 20 l Rührreaktor werden 4700 g Zucker und 1450 g Glycerin vorgelegt und der Reaktor wird evakuiert. Das Vakuum wird mit Stickstoff gebrochen, 200 g Dimethylethanolamin werden zudosiert und die Mischung auf 105 °C geheizt. Nach Erreichen der Reaktionstemperatur werden über 10h 13500 g PO so dosiert, dass der Druck nicht über 7 bar steigt. Nach Erreichen eines konstanten Reaktordruckes wurde nicht umgesetztes Monomer und andere flüchtige Bestandteile im Vakuum abdestilliert und das Polyetherol abgelassen

Das erhaltene Polyetherol (Polyol II) besitzt folgende Kennzahlen:
OHZ: 450 mg KOH/g
Viskosität: (25°C) 19800 mPas
Mittleres Molekulargewicht: 630 g/mol

### Beispiel 3

Das DMC-katalysierte Polyetherol (Polyol I) wurde in einer Laborapparatur gestrippt. Die Versuchskolonne hatte einen Durchmesser von 0,05 m und verfügte über 7 Schüsse à 0,5 m Gewebepackung vom Typ Montz A3-500. Nach jedem Schuss wurde die Flüssigkeit gesammelt und wieder verteilt. Der Kolonnenmantel wurde auf 130°C temperiert und der Kopfdruck der Kolonne lag bei 50 mbar absolut. Dabei wurde reines Polyetherol 1 bereitgestellt und vor dem Versuch gezielt mit 400 ppm 1,2-Propylenoxid (PO) versetzt. Ethylenoxid wurde vernachlässigt, da die Erfahrung besteht, dass bei Einhaltung der PO-Spezifikation auch EO ausreichend abgereichert ist. Die Zielspezifikation lag im Bereich < 5 bis < 1 Gew.-ppm PO am Kolonnensumpf. Mit diesem Aufbau und der Einstellung von F = 0,17 Pa^0,5 und einer Berieselungsdichte von 7 m³/(m² * h) wurden PO-Konzentrationen < 1 Gew.-ppm PO im Sumpf erreicht. Das Verhältnis Polyol I/Dampf betrug 0,95 kmol Polyol I/kmol Dampf.

F = F-Faktor oder Gasbelastungsfaktor ist das Produkt aus der Gasgeschwindigkeit und der Wurzel der Gasdichte, wobei die Gasgeschwindigkeit der Volumenstrom des Gases dividiert durch den freien Kolonnenquerschnitt ist.

### Beispiel 4

Ein Amin-katalysiertes Polyetherol (Polyol II) wurde in einer Laborapparatur gestrippt. Die Versuchskolonne hatte einen Durchmesser von 0,05 m und verfügte über 8 Schüsse à 0,5 m Gewebepackung Montz A3-500. Nach jedem Schuss wurde die Flüssigkeit gesammelt und wieder verteilt. Die Sumpftemperatur betrug 110-120°C und der Kopfdruck der Kolonne lag bei 50 mbar absolut. Dabei wurde reines Polyetherol bereitgestellt und vor dem Versuch gezielt mit 1,2-Propylenoxid (PO) versetzt. Die Zielspezifikation lag im Bereich < 1 Gew.-ppm PO am Kolonnensumpf. Die Ausgangskonzentration lag bei 1000 Gew.-ppm PO und 8 kg/h Polyetherol (Feedtemperatur: 125°C bei 5 bara). Mit diesem Aufbau und der Einstellung von F = 0,18 Pa^0,5 und einer Flüssigkeitslast von 3,73-3,96 m³/(m² * h) wurden PO-Konzentrationen < 1 Gew.-ppm PO am Sumpf erreicht. Ferner wurden 0,265 kg/h Stickstoff durch die Kolonne gegeben. Das Verhältnis Polyol II/N₂ betrug somit 1,31 kmol Polyol II/kmol N₂ bis 1,38 kmol Polyol II/kmol N₂.

### Beispiel 5

Ein Amin-katalysiertes Polyetherol (Polyol II) wurde in einer Laborapparatur gestrippt. Die Versuchskolonne hatte einen Durchmesser von 0,05 m und verfügte über 8 Schüsse à 0,5 m Gewebepackung Montz A3-500. Nach jedem Schuss wird die Flüssigkeit gesammelt und wieder verteilt. Die Sumpftemperatur betrug 120-125°C und der Kopfdruck der Kolonne lag bei 50 mbar absolut. Dabei wurde reines Polyetherol bereitgestellt und vor dem Versuch gezielt mit 1,2-Propylenoxid (PO) versetzt. Die Zielspezifikation lag im Bereich < 1 Gew.- ppm PO am Kolonnensumpf. Die Ausgangskonzentration lag bei 2000 Gew.-ppm PO und 12,8 kg/h Polyol (Feedtemperatur: 125°C bei 5 bara). Mit diesem Aufbau und der Einstellung von F = 0,17 Pa^0,5 und einer Flüssigkeitslast von 6 m³/(m² * h) wurden PO-Konzentrationen < 1 Gew.-ppm PO am Sumpf erreicht. Ferner wurden 200g/h Dampf durch die Kolonne gegeben. Das Verhältnis Polyol II/Dampf betrug somit 2,01 mol Polyol II/mol Dampf.

### Vergleichsbeispiel 1

Für den Strippprozess wurde eine Blasensäule (ID = 10 cm) verwendet, die zur Temperierung einen Doppelmantel und am Boden zur Gaseinleitung einen Ringverteiler (d = 4cm) mit zahlreichen Bohrungen besaß. Die Temperatur der Blasensäule wurde über einen handelsüblichen Thermostaten konstant gehalten. Der Druck in der Blasensäule wurde mittels Vakuumpumpe konstant bei 300 mbar gehalten.

Für das Strippen wurden 6 kg des Polyol I unter inerten Bedingungen in die mit Stickstoff inertisierte Blasensäule gepumpt. Anschließend wurde das Polyol I auf Stripp-temperatur aufgeheizt und gleichzeitig der Druck in der Blasensäule eingestellt. Wasserdampf wurde über den Ringverteiler eingespeist, wobei die Menge über einen Wasserdampfmesser kontrollliert wurde.

Nach 2h Strippen bei einem Dampfstrom von 80g/h betrug der freie PO-Gehalt 3 ppm. Das Verhältnis Polyol I/Dampf betrug damit 0,2 mol Polyol I/Mol Dampf.

### Vergleichsbeispiel 2:

Für den Strippprozess wurde eine Blasensäule (ID = 10 cm) verwendet, die zur Temperierung einen Doppelmantel und am Boden zur Gaseinleitung einen Ringverteiler (d = 4cm) mit zahlreichen Bohrungen besaß. Die Temperatur der Blasensäule wurde über einen handelsüblichen Thermostaten konstant gehalten. Der Druck in der Blasensäule wurde mittels Vakuumpumpe konstant bei 300 mbar gehalten.

Für das Strippen wurden 6 kg des Polyol II unter inerten Bedingungen in die mit Stickstoff inertisierte Blasensäule gepumpt. Anschließend wurde das Polyetherol auf Stripp-temperatur aufgeheizt und gleichzeitig der Druck in der Blasensäule eingestellt. Stickstoff wurde über den Ringverteiler eingespeist, wobei die Menge über Rotameter kontrollliert wurde.

Nach 2h Strippen bei einem Stickstoffstrom 13 NL/min betrug der freie PO-Gehalt 6 ppm. Das Verhältnis Polyol II/Stickstoff betrug damit 16,5 mol Polyol II/mol Stickstoff.

### Vergleichsbeispiel 3:

Für den Strippprozess wurde eine Blasensäule (ID = 10 cm) verwendet, die zur Temperierung einen Doppelmantel und am Boden zur Gaseinleitung einen Ringverteiler (d = 4cm) mit zahlreichen Bohrungen besaß. Die Temperatur der Blasensäule wurde über einen handelsüblichen Thermostaten konstant gehalten. Der Druck in der Blasensäule wurde mittels Vakuumpumpe konstant bei 300 mbar gehalten.

Für das Strippen wurden 6 kg des Polyols II unter inerten Bedingungen in die mit Stickstoff inertisierte Blasensäule gepumpt. Anschließend wurde das Polyetherol 2 auf Stripp-Temperatur aufgeheizt und gleichzeitig der Druck in der Blasensäule eingestellt. Wasserdampf wurde über den Ringverteiler eingespeist, wobei die Menge über einen Wasserdampfmesser kontrolliert wurde.

Nach 2h Strippen bei einem Dampfstrom 20 g/h betrug der freie PO-Gehalt 12 ppm. Das Verhältnis Polyol II/Dampf betrug damit 4,3 mol Polyol II/mol Dampf.

## Patentansprüche

1. Verfahren zur Herstellung von Polyetherolen, umfassend die folgenden Schritte:
a) Umsetzen mindestens einer Starterverbindung mit mindestens einem Alkylenoxid und einem Amin- oder DMC-Katalysator zu einem Rohpolyetherol und
b) Entfernung von niedermolekularen Nebenprodukten aus dem Rohpolyetherol aus Schritt a),
**dadurch gekennzeichnet, dass** das Rohpolyetherol im Schritt b) in einer Kolonne mit Einbauten mit einem Strippgas behandelt wird, wobei das Verfahren kontinuierlich ausgeführt wird.

2. Verfahren gemäß Anspruch 1, wobei als Alkylenoxid Ethylenoxid und/oder Propylenoxid eingesetzt wird.

3. Verfahren gemäß Anspruch 1 oder 2, wobei die Behandlung in Schritt b) in einer gepackten Kolonne erfolgt.

4. Verfahren gemäß einem der Ansprüche 1 bis 3, wobei die gepackte Kolonne eine Gewebepackung aufweist.

5. Verfahren gemäß einem der Ansprüche 1 bis 4, wobei als Strippgas ein Wasserdampf-haltiges Gasgemisch eingesetzt wird und nach Schritt b) kein Trocknungsschritt erfolgt.

6. Verfahren gemäß einem der Ansprüche 1 bis 4, wobei Schritt b) bei einer Temperatur im Bereich von 100 bis 160°C durchgeführt wird.

7. Verfahren gemäß einem der Ansprüche 1 bis 6, wobei Schritt b) bei einer Berieselungsdichte von 0,5 bis 20 m³/m² * h durchgeführt wird.

8. Verfahren gemäß einem der Ansprüche 1 bis 7, wobei in Schritt b) das Strippgas in Mengen von 1 bis 30 Nm³ pro Tonne Polyetherol eingesetzt wird.

9. Verfahren gemäß einem der Ansprüche 1 bis 8, wobei Schritt b) bei einem Druck von 2 bis 300 mbar (absolut) durchgeführt wird.

10. Verfahren gemäß einem der Ansprüche 1 bis 8, wobei Schritt b) bei einem Druck von 5 bis 80 mbar (absolut) durchgeführt wird.

11. Verfahren gemäß einem der Ansprüche 1 bis 8, wobei Schritt b) bei einem Druck von 8 bis 60 mbar (absolut) durchgeführt wird.

## Claims

1. A process for the preparation of polyetherols, comprising the following steps:
a) reaction of at least one starter compound with at least one alkylene oxide and an amine catalyst or DMC catalyst to give a crude polyetherol and
b) removal of low molecular weight byproducts from the crude polyetherol from step a),
which comprises treating the crude polyetherol in step b) with a stripping gas in a column having internals, the process being carried out continuously.

2. The process according to claim 1, wherein the alkylene oxide used is ethylene oxide and/or propylene oxide.

3. The process according to claim 1 or 2, wherein the treatment in step b) is effected in a packed column.

4. The process according to any of claims 1 to 3, wherein the packed column has a fabric packing.

5. The process according to any of claims 1 to 4, wherein the stripping gas used is a steam-containing gas mixture and no drying step is effected after step b).

6. The process according to any of claims 1 to 4, wherein step b) is carried out at a temperature in the range from 100 to 160°C.

7. The process according to any one of claims 1 to 6, wherein step b) is carried out with an irrigation density of from 0.5 to 20 m³/m²*h.

8. The process according to any of claims 1 to 7, wherein the stripping gas is used in amounts of from 1 to 30 m³ (S.T.P) per metric ton of polyetherol in step b).

9. The process according to any of claims 1 to 8, wherein step b) is carried out at a pressure of from 2 to 300 mbar (absolute).

10. The process according to any of claims 1 to 8, wherein step b) is carried out at a pressure of from 5 to 80 mbar (absolute).

11. The process according to any of claims 1 to 8, wherein step b) is carried out at a pressure of from 8 to 60 mbar (absolute).

## Revendications

1. Procédé pour la production de polyétherols, comprenant les étapes suivantes :
a) mise en réaction d'au moins un composé de départ avec au moins un oxyde d'alkylène et un catalyseur de type DMC ou amine, pour l'obtention d'un polyétherol brut et
b) séparation des sous-produits de faible masse moléculaire d'avec le polyétherol brut provenant de l'étape a),
**caractérisé en ce que** dans l'étape b) on traite le polyétherol brut par un gaz d'entraînement dans une colonne munie d'inserts, le procédé étant effectué en continu.

2. Procédé selon la revendication 1, dans lequel on utilise comme oxyde d'alkylène l'oxyde d'éthylène et/ou l'oxyde de propylène.

3. Procédé selon la revendication 1 ou 2, dans lequel le traitement dans l'étape b) s'effectue dans une colonne à garnissage.

4. Procédé selon l'une quelconque des revendications 1 à 3, dans lequel la colonne à garnissage comporte un garnissage en tissu.

5. Procédé selon l'une quelconque des revendications 1 à 4, dans lequel on utilise comme gaz d'entraînement un mélange de gaz contenant de la vapeur d'eau et aucune étape de séchage n'est effectuée après l'étape b).

6. Procédé selon l'une quelconque des revendications 1 à 4, dans lequel on effectue l'étape b) à une température dans la plage de 100 à 160 °C.

7. Procédé selon l'une quelconque des revendications 1 à 3, dans lequel on effectue l'étape b) à un débit de ruissellement de 0,5 à 20 m³/m²*h.

8. Procédé selon l'une quelconque des revendications 1 à 7, dans lequel on utilise dans l'étape b) le gaz d'entraînement en des quantités de 1 à 30 Nm³ par tonne de polyétherol.

9. Procédé selon l'une quelconque des revendications 1 à 8, dans lequel on effectue l'étape b) sous une pression (absolue) de 2 à 300 mbars.

10. Procédé selon l'une quelconque des revendications 1 à 8, dans lequel on effectue l'étape b) sous une pression (absolue) de 5 à 80 mbars.

11. Procédé selon l'une quelconque des revendications 1 à 8, dans lequel on effectue l'étape b) sous une pression (absolue) de 8 à 60 mbars.
